Europäisches Patentamt

European Patent Office

Office européen des brevets

(19)

(11)  EP 0 896 263 B1

(12)  EUROPÄISCHE PATENTSCHRIFT

(45) Veröffentlichungstag und Bekanntmachung des Hinweises auf die Patenterteilung:
14.11.2001  Patentblatt 2001/46

(51) Int Cl.[7]: **G05B 13/00**

(21) Anmeldenummer: 98114272.2

(22) Anmeldetag: 30.07.1998

(54) **Verfahren und Schaltungsanordnung zur Ermittlung optimaler Reglerparameter für eine Drehzahlregelung**

Method and circuit for determining optimal control parameters for rotational speed control

Procédé et circuit pour déterminer les paramètres optimaux pour contrôle de vitesse de rotation

(84) Benannte Vertragsstaaten:
CH DE FR GB IT LI

(30) Priorität: 07.08.1997  DE 19734208

(43) Veröffentlichungstag der Anmeldung:
10.02.1999  Patentblatt 1999/06

(73) Patentinhaber: **Dr. Johannes Heidenhain GmbH**
**83292 Traunreut (DE)**

(72) Erfinder: **Kerner, Norbert**
**83374 Traunwalchen (DE)**

(56) Entgegenhaltungen:
**US-A- 5 223 778**

**Beschreibung**

Die Erfindung betrifft ein Verfahren zur Ermittlung optimaler Reglerparameter für eine Drehzahlregelung nach Anspruch 1 und eine Anordnung zur Durchführung des Verfahrens nach Anspruch 11.

Aus der US 5157597 ist bekannt, bei einem Servosystem Oszillationen im Betrieb zu erkennen und die Schleifenverstärkung von Regelschleifen zu verändern. Dabei wird eine Kennlinie für das Verhältnis von Verstärkung der Positionsregelschleife zu Positionsabweichung derart festgelegt, daß die Schleifenverstärkung für bestimmte Werte der Positionsabweichung einen großen Wert annimmt. Es wird im Betrieb periodisch die Positionsabweichung ermittelt und die Haupt-Schwingungskomponente der Positionsabweichung ermittelt. Schließlich wird die Schleifenverstärkung des Servosystems derart eingestellt, daß die Haupt-Schwingungskomponente in einen bestimmten Frequenzbereich fällt.

Dabei ist von Nachteil, daß während der Laufzeit der Frequenzbereich eingestellt wird, in dem das Servosystem anfängt zu oszillieren, die Oszillationsneigung aber nicht verringert wird. Somit erfolgt auch keine Optimierung der Reglerparameter. Unter unterschiedlichen Belastungszuständen kann sich der eingestellte Frequenzbereich verlagern, was zu einer Oszillation und damit zur Beschädigung des Servosystems führen kann.

Aus der US 4549123 ist ein Verfahren zum Einstellen eines PID-Reglers bekannt. Dabei wird dem PID-Regler eine nichtlineare Baugruppe vorgeschaltet, deren Ausgangssignal entweder eine konstante negative oder positive Amplitude aufweist. Die Reglerparameter werden anschließend derart verändert, daß die Übertragungsfunktion der nichtlinearen Baugruppe multipliziert mit der gemeinsamen Übertragungsfunktion von Regler und Regelstrecke für eine bestimmte Amplitude und eine bestimmte Frequenz den Wert -1 ergibt und der derartig veränderte Regelkreis somit an diesem Punkt in Oszillation geraten kann. Danach werden gemäß den Formeln von Ziegler und Nichols verschiedene Kenngrößen berechnet und der Regler abhängig von den berechneten Kenngrößen eingestellt.

Dabei ist von Nachteil, daß die gesamte Reglerstuktur verändert werden muß, lediglich eine Änderung der Reglerparameter durchzuführen ist nicht vorgesehen.

Aus der EP 347 465 B1 ist bekannt, daß ein Servomotor bei geringen Drehzahlen eher zu Oszillationen neigt als bei großen Drehzahlen. Daher ist ein Regelkreis für den Servomotor vorgesehen, dessen Verstärkung im P- und I-Zweig des Reglers abhängig von der Drehzahl eingestellt wird. Dadurch wird erreicht, daß bei niedrigen Drehzahlen der Servomotor nicht zu oszillieren beginnt und bei hohen Drehzahlen keine unnötige Begrenzung des Drehmoments erfolgt.

Hierbei ist nachteilig, daß bereits optimale Startwerte für einen stabilen Betrieb vorhanden sein müssen, die dann lediglich an eine veränderte Drehzahl des Elektromotors angepaßt werden. Wie die Startwerte bestimmt werden, wird jedoch nicht offenbart.

Insgesamt berücksichtigen die dem Stand der Technik entnehmbaren Verfahren zur Unterdrückung von Oszillationen bei geregelten Elektromotoren nicht, daß ein Elektromotor in eine mechanische Anordnung eingefügt ist, die die Oszillationsneigung des gesamten Antriebssystems wesentlich verändern kann. Aufgrund von zusätzlichen mechanischen Baugruppen zur Übertragung der durch den Elektromotor erzeugten Bewegung, die im Anwendungsfall permanent mit dem Motor verbunden sind, ist die Bestimmung der Oszillationsneigung nur des Elektromotors nicht ausreichend.

Aus der US 5223778 ist ein weiteres Verfahen zum automatisierten Einstellen der Parameter eines PID-Regelkreises bekannt. Hierbei wird der PID-Regelkreis mit einem niederfrequenten, sinusförmigen Testsignal beaufschlagt und in Abhängigkeit der Systemantwort die optimalen Regelkreis-Parameter bestimmt. Eine optimierte Einstellung der Regelkreis-Parameter in allen Reglerzweigen ist mit einem derartigen Verfahren jedoch nicht möglich.

Es stellt sich somit die Aufgabe, ein Verfahren zur automatischen Bestimmung von Reglerparametern für eine Drehzahlregelung anzugeben, wobei durch die Reglerparameter ein Oszillieren der gesamten Antriebsbaugruppe zuverlässig verhindert wird und gleichzeitig möglichst genau das benötigte Drehmoment des Elektromotors zur Verfügung steht, so daß möglichst schnell die Soll-Drehzahl erreicht wird. Die Reglerparameter sollen dabei derart bestimmt werden, daß Einflüsse berücksichtigt werden, die sowohl durch den Elektromotor als auch durch weitere Baugruppen der Antriebsbaugruppe verursacht werden. Das Verfahren soll außerdem möglichst einfach und kostengünstig zu realisieren sein.

Diese Aufgabe wird durch die in Anspruch 1 und Anspruch 11 angegebenen Merkmale gelöst.

Das erfindungsgemäße Verfahren weist den Vorteil auf, daß der Elektromotor bei der Einstellung der Reglerparameter mit den anderen Baugruppen der Antriebsbaugruppe verbunden ist, so daß zusätzlich zu den Einflüssen des Elektromotors auch die der weiteren Baugruppen der Antriebsbaugruppe berücksichtigt werden. Ein weiterer Vorteil besteht darin, daß durch das erste impulsförmige Anregungssignal des Testsignalgenerators ein Freischlagen der Antriebsbaugruppe erfolgt, wodurch die minimale Dämpfung des Elektromotors durch die mechanisch elastisch angekoppelten Baugruppen erreicht wird. Weiterhin von Vorteil ist, daß aufgrund der speziellen Testsignale zunächst der P-Anteil und danach der I-Anteil, abhängig vom bereits eingestellten P-Anteil des Reglers, optimal eingestellt werden.

Die Erfindung wird im folgenden anhand der in der Zeichnung dargestellten Ausführungsformen näher erläutert. Es zeigen:

Fig. 1:     eine elektromechanische Antriebsbaugruppe,

Fig. 2:     ein Blockschaltbild einer Drehzahlregelung für einen Elektromotor,

Fig. 3      ein Testsignal zur Bestimmung der Verstärkung des P-Anteils des Drehzahlreglers und eine Bewertungsfunktion zur Beurteilung dessen Stabilität,

Fig. 4      ein Soll-Drehzahlverlauf und mögliche Ist-Drehzahlverläufe für unterschiedliche Verstärkungen des I-Anteils,

Fig. 5      eine Bewertungsfunktion zur Beurteilung der Stabilität des I-Anteils des Drehzahlreglers.

Es wird im folgenden davon ausgegangen, daß das erfindungsgemäße Verfahren zur Ermittlung optimaler Reglerparameter für eine Drehzahlregelung bei einem Servomotor einer Werkzeugmaschine angewandt wird. Für den Fachmann ist jedoch unmittelbar klar, daß das erfindungsgemäße Verfahren auch bei jedem anderen Elektromotor benutzt werden kann, dessen Drehzahl ohne zu oszillieren schnellstmöglich auf eine Solldrehzahl geregelt werden soll, beispielsweise einem Spindelmotor.

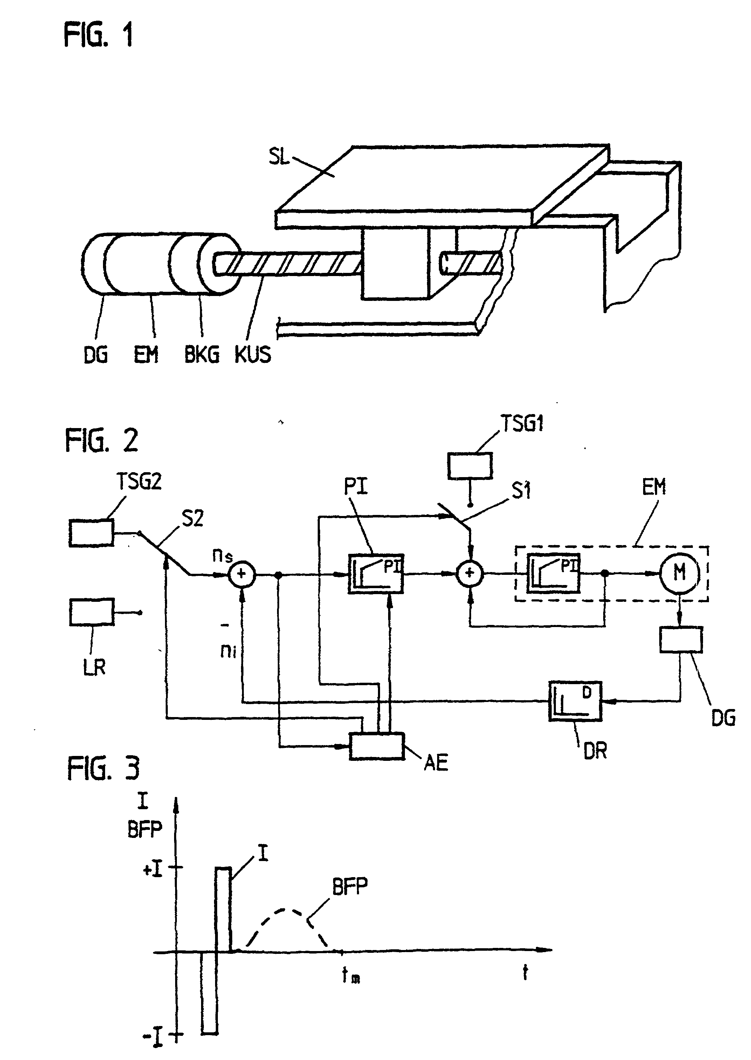

Fig. 1 zeigt ein Beispiel einer möglichen Antriebsbaugruppe, in der ein Elektromotor EM mit einem Drehgeber DG und weiteren mechanischen Baugruppen wie beispielsweise einer Baugruppe BKG gekoppelt ist, die eine Bremse, eine Kupplung und ein Getriebe für den Elektromotor EM beinhalten kann. Dabei ist es nicht zwingend erforderlich, daß die Baugruppe BKG alle drei genannten Funktionen realisiert. Die durch den Elektromotor EM erzeugte Drehbewegung wird über eine Kugelumlaufspindel KUS an einen Schlitten SL weitergeleitet, auf dem ein Werkstück eingespannt sein kann, so daß auch diese beiden Baugruppen zur Antriebsbaugruppe gehören.

Für eine Vielzahl von Bearbeitungsschritten von auf dem Schlitten eingespannten Werkstücken ist es zwingend erforderlich, daß der Schlitten SL mit konstanter Geschwindigkeit verfahren wird. Um dies sicherzustellen, wird die Drehzahl des Elektromotors EM geregelt.

Fig. 2 zeigt einen möglichen Regelkreis zur Drehzahlregelung des Elektromotors EM. Der Elektromotor EM weist einen vorgeschalteten Stromregler auf, der aber für die vorliegende Erfindung nicht von Bedeutung ist. Die Ist-Drehzahl ni des Elektromotors EM wird durch zeitliches Differenzieren der Positionswerte eines Drehgebers DG in einem Differenzierer DR ermittelt und mit negativem Vorzeichen in einem Addierer zu der vorgegebenen Soll-Drehzahl ns , die die Führungsgröße darstellt, addiert.

Die Regelabweichung ns-ni wird durch einen Regler PI, der insbesondere einen Proportional- und Integral-Zweig (P- und I-Zweig) mit der entsprechenden P- und I-Regelcharakteristik aufweist, deren Verstärkungen separat einstellbar sind, dem Elektromotor EM zugeleitet.

Der Regler PI gibt aufgrund seiner Charakteristik ein um die im P-Zweig eingestellte Verstärkung verstärktes Eingangssignal und eine um die im I-Zweig eingestellte Verstärkung verstärkte Summe aus Eingangssignalen, die während einer bestimmten Dauer vorlagen, aus. Der vorliegende Regler PI weist im wesentlichen eine derartige PI-Charakeristik auf, es besteht aber die Möglichkeit, daß der Regler PI auch weitere Charakteristiken aufweist.

Weiterhin sind erfindungsgemäß zwei Schalter S1 und S2 sowie zwei Testsignalgeneratoren TSG1 und TSG2 vorgesehen. Durch S1 wird Testsignalgenerator TSG1 mit einem Addierer verbunden, der die Summe der Ausgangssignale des Reglers PI und des Testsignalgenerators TSG1 dem Elektromotor EM zuleitet. Durch S2 kann als Führungsgröße das Ausgangssignal des Testsignalgenerators TSG2 ausgewählt werden. Zudem ist eine Analyseeinheit AE vorgesehen, der das Eingangssignal des Reglers PI und über einen in Fig. 2 nicht dargestellten Abgriff das Aus-gangsignal des Differenzierers DR zugeleitet wird und die sowohl eine Recheneinheit als auch eine Steuereinheit zur Steuerung der Schalter S1 und S2 sowie der Testsignalgeneratoren TSG1 und TSG2 beinhaltet. Darüber hinaus steuert die Steuereinheit auch die Einstellung der unterschiedlichen Verstärkungen in den Zweigen des Reglers PI. Die Recheneinheit der Analyseeinheit AE führt während kurzer Meßintervalle die Abtastung und Quantifizierung des Eingangssignals des Reglers PI und des Ausgangssignals des Differenzierers DR sowie deren Bewertung und die Ermittlung der unterschiedlichen Fehlerfunktionen durch.

Damit der Regelkreis nicht längere Zeit oszilliert, also im Betrieb keine ungedämpfte Schwingung entsteht, durch die mechanische oder elektrische Komponenten der gesamten Anordnung aus Fig. 1 beschädigt werden könnten, werden die beiden Verstärkungen des P- und I-Zweigs des Reglers PI nur für die kurzen Meßintervalle entsprechend nacheinander eingestellt. Außerhalb der Meßintervalle werden in P- und I-Zweig Verstärkungen eingestellt, die sicher ein Oszillieren des Regelkreises verhindern.

In einem ersten Schritt wird zur Ermittlung der optimalen Verstärkungen im P-Zweig des Reglers PI die Führungsgröße Soll-Drehzahl ns nicht durch einen Lageregelkreis LR vorgegeben, wie im herkömmlichen Betrieb, sondern es wird über einen zweiten Schalter S2 ein konstanter Wert, insbesondere Null als Soll-Drehzahl ns vorgegeben. Zusätzlich wird über einen ersten Schalter S1 das Signal eines ersten Testsignalgenerators TSG 1 dem Regelkreis nach dem Regler PI zugeleitet. Dadurch werden dem Elektromotor EM Stromimpulse vorgegeben, die den maximal zulässigen Strom für den Elektromotor EM nicht überschreiten und eine eventuell vorhandene Strombegrenzungsschaltung nicht aktiviert wird. Dieser Strom wird für sehr kurze Zeit, beispielsweise die Dauer einer Zeitkonstanten des Regelkreises, vorgegeben, so daß ein Strom-Impuls an den Elektromotor EM ausgegeben wird, wie in Fig. 3 ab dem Zeitpunkt to dargestellt. Im Anschluß an den Stromimpuls ist in Fig. 3 eine mögliche Bewertungsfunktion BFP für die Ist-Drehzahl ni, die nach dem Stromimpuls durch den Regelkreis im Elektromotor EM eingestellt wird, dargestellt.

Bevor der Stromimpuls ausgegeben wird befindet sich der Elektromotor im Stillstand. Da die Neigung zu Oszillieren aus dem Stillstand größer ist als im Betrieb, wird dadurch sichergestellt, daß die Stabilität im labilsten Zustand des Elektromotors EM ermittelt wird.

Die Drehzahl des Elektromotors EM wird während einer kurzen Meßzeit tm abgetastet und quantisiert. Bei einer nicht erwünschten Oszillation weist die Ist-Drehzahl ni einen ungedämpften oder nur schwach gedämpften Verlauf auf. Tritt keine Oszillation auf, so verringert sich die Ist-Drehzahl ni schnell, da zwischenzeitlich durch den ersten Testsignalgenerator TSG1 als Soll-Drehzahl ns Null eingestellt ist, bzw. dieser über Schalter S1 vom Regelkreis getrennt wird. Wird nun nach Formel (1) das Verhältnis V von mit einer Bewertungsfunktion BFP multiplizierten Abtastwerten der Ist-Drehzahl ni zu unbewerteten Abtastwerten der Ist-Drehzahl ni berechnet, so liegt dann keine Oszillation vor, wenn das Verhältnis V<1 ist.

$$V = \frac{\sum_{i=0}^{m} \left| ni(t_i) * \left( 1 - \cos\left( 2\pi \frac{t_i}{t_m} \right) \right) \right|}{\sum_{i=0}^{m} \left| ni(t_i) \right|} \tag{1}$$

Bei der gewählten Bewertungsfunktion BFP ist lediglich darauf zu achten, daß diese am Anfang des Meßintervalls einen Wert nahe Null aufweisen sollte und der Quotient aus der Summe der Bewertungsfaktoren der Bewertungsfunktion BFP durch die Anzahl der Bewertungsfaktoren ein Resultat von eins aufweisen muß. Ansonsten kann die Bewertungsfunktion BFP weitgehend beliebig gewählt werden.

Dieser erste Schritt wird zunächst für eine kleine Verstärkung im P-Zweig des Reglers durchgeführt, so daß ein Oszillieren nicht möglich ist. Der I-Zweig wird während der Messung deaktiviert, indem dessen Verstärkung auf sehr kleine Werte oder Null eingestellt wird. Danach wird die Verstärkung ausschließlich im P-Zweig so lange erhöht, bis das Verhältnis V fast den Wert 1 erreicht hat. Anschließend wird der so ermittelte Wert der Verstärkung für den P-Zweig mit einem Faktor kleiner 1, beispielsweise mit dem Faktor 0,45 gemäß Ziegler und Nichols, multipliziert und im P-Zweig des Reglers PI eingestellt. Dadurch wird sichergestellt, daß durch den P-Zweig keine Oszillation des Elektromotors EM verursacht werden kann.

Aufgrund der definierten Anregung des Elektromotors EM durch den ersten Testsignalgenerator TSG1 mit einem impulsartigen Strom wird sichergestellt, daß im wesentlichen nur durch den P-Zweig des Regelkreises auf diese Anregung reagiert wird. Derart ist es durch die Wahl des Anregungssignals des Testsignalgenerators TSG gelungen auf besonders einfache Weise den P-Anteil des Reglers PI zu separieren. Da die Schwingungsneigung der Antriebsbaugruppe aus der spannungsfreien Ruhelage heraus am größten ist, wird der Elektromotor EM zunächst durch Stromimpulse in diesen spannungsfreien Zustand gebracht. Nachdem diese Stromimpulse vom Testsignalgenerator TSG 1 ausgegeben wurde, wird Schalter S1 wieder geöffnet.

Unmittelbar vor dem Regler PI wird das invertierte Differenzsignal der Drehzahlen ns-ni zur Analyse abgegriffen. Dies weist den Vorteil auf, daß die Stabilitätsbestimmung unabhängig von einer absoluten Drehzahl erfolgen kann. Insbesondere bei Vertikalachsen, die ihren spannungsfreien und somit dämpfungsärmsten Zustand in der Regel nicht bei der Drehzahl Null haben, ist dies vorteilhaft.

In einem zweiten Schritt zur Bestimmung der Reglerparameter wird dem Regelkreis zur Ermittlung der Verstärkung im I-Zweig eine Soll-Drehzahl ns durch einen zweiten Testsignalgenerator TSG 2 vorgegeben, die gemäß einer Sprungfunktion verläuft. Dafür wird Testsignalgenerator TSG 2 über Schalter S2 mit dem Eingang des Regelkreises verbunden. Der Soll-Drehzahlsprung wird derart berechnet, daß der Elektromotor EM nicht überlastet wird und keine Begrenzung des Stroms erfolgt. Dabei wird während eines kurzen Meßintervalls die Sprungantwort des Elektromotors EM abgetastet und quantisiert.

Dann wird eine Fehlerfunktion F nach Formel (2) berechnet, die aus der Summe der Drehzahlen besteht, die über der Soll-Drehzahl ns und dem Quadrat der Summe der Drehzahlen, die unter der Soll-Drehzahl ns liegen. Zusätzlich erfolgt in Formel (2) eine zeitliche Bewertung des Einschwingverhaltens des Regelkreises durch eine Bewertungsfunktion BFI.

$$F = \sum_{i=0}^{l} bfi(i)*(ni - ns) + \sum_{j=0}^{k} bfi(j)*(nj - ns)^2 \text{ mit } (ni\text{-}ns)\text{>}0 \text{ und } (nj\text{-}ns)\text{<}0$$

$$(2)$$

Durch die Quadrierung gehen die Unterschreitungen der Soll-Drehzahl ns wesentlich stärker als Fehler in die Berechnung ein, als Überschreitungen der Drehzahl. Es hat sich in der Praxis gezeigt, daß eine derartige lineare Bewertung von Drehzahlüberschreitungen und quadratische von Drehzahlunterschreitungen bezüglich der Soll-Drehzahl ns eine schnellstmögliche Annäherung an die Soll-Drehzahl ns bewirkt.

Zusätzlich wird in Formel (2) eine Bewertungsfunktion BFI zur Gewichtung der Abweichungen von der Drehzahl durchgeführt. Die Summanden werden dafür noch mit einem Koeffizienten bfi multipliziert. Durch die Bewertungsfunktion BFI wird erreicht, daß eine erstes Überschreiten der Solf-Drehzahl ns nahezu ohne Bedeutung ist, wohingegen ein darauffolgendes Unterschreiten der Soll-Drehzahl ns besonders stark bewertet wird.

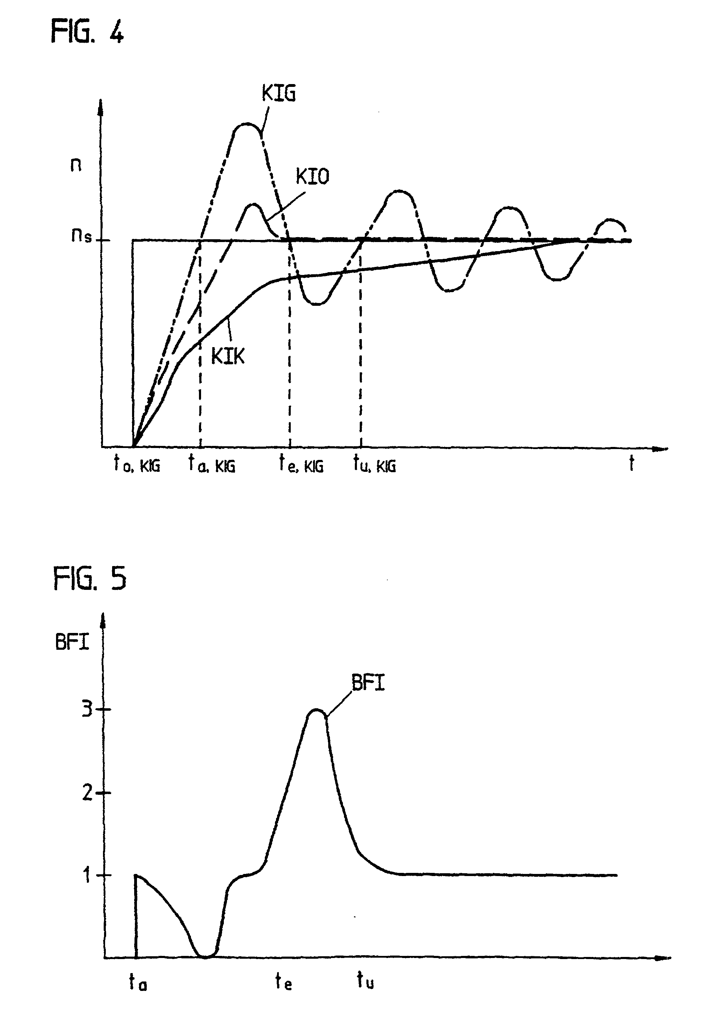

Fig. 4 zeigt verschiedene Verläufe der Ist-Drehzahl ni. Vom zweiten Testsignalgenerator TSG 2 wird als Führungsgröße zum Zeitpunkt to die Soll-Drehzahl ns ausgegeben. Bei einer zu großen Verstärkung im I-Zweig des Reglers PI wird die Drehzahl gemäß der Kurve KIG verlaufen und viele große Über- und Unterschwinger um die Soll-Drehzahl ns aufweisen. Bei zu kleiner Verstärkung im I-Zweig wird die Drehzahl gemäß der Kurve KIK verlaufen und sich nur langsam an die Soll-Drehzahl ns annähern. Bei annähernd optimaler Verstärkung im I-Zweig des Reglers PI weist die Ist-Drehzahl ni einen nahezu optimalen Verlauf gemäß der Kurve KIO auf und erreicht schnellstmöglich ohne Nachschwingen die Soll-Drehzahl ns. Die angegebenen Zeitpunkte ta, te und tu beziehen sich auf die Kurve KIG.

In Fig. 5 ist der Verlauf der Bewertungsfunktion BFI für die Kurve KIG aus Fig. 4 dargestellt. Man erkennt, daß zunächst der Drehzahlverlauf im Zeitraum zwischen to und ta nicht berücksichtigt wird. Weiterhin ist die geringe Gewichtung des ersten Überschwingers zwischen den Zeitpunkten ta und te und die starke Bewertung des ersten Unterschwingers zwischen den Zeitpunkten te und tu zu erkennen. Die Gewichtung nach dem Zeitpunkt tu variiert nicht mehr. Die Zeitpunkte tu und ta sind Vielfache von ta und werden daher bei jeder Messung neu bestimmt. Die Zeitdauer zwischen tu und te sowie zwischen te und ta entspricht jeweils ungefähr der 2,5-fachen Dauer zwischen ta und to.

Zusätzlich zur Bewertung des Einschwingverhalten des Regelkreises auf die Soll-Drehzahl ns wird die Anregelzeit ta, bis die Ist-Drehzahl ni erstmals die Soll-Drehzahl ns erreicht hat, bewertet. Hierfür wird eine weitere Fehlerfunktion FF gemäß Formel (3) berechnet.

$$FF = F*t_a^{k} \text{ mit } k= 1 \ldots 3 \qquad\qquad (3)$$

Bei der Einstellung der Verstärkung im I-Zweig wird von einer großen Verstärkung ausgehend, bei der eine Oszillation in der Antriebsbaugruppe vorliegt, die Verstärkung bis zu einem Minimum der Größe FF aus Formel (3) verringert. Anschließend wird die Verstärkung wieder erhöht, bis eine merkliche Verschlechterung der Größe FF aus Formel (3) im Bereich von 10% vorliegt. Dann wird der unmittelbar davor ermittelte Wert für die Verstärkung im I-Zweig benutzt.

Die vom Testsignalgeneratoren TSG 1 ausgegebenen Anregungssignale für den Elektromotor EM können in einer vorteilhaften Ausgestaltung derart ausgebildet sein, daß unmittelbar anschließend an die impulsförmige Vorgabe einer Drehzahl, die einen Stromimpuls I auslöst, ein identisches Anregungssignal mit negativem Vorzeichen vorgegeben wird, wie in Fig. 3 dargestellt. Die zusätzliche negative impulsförmige Drehzahlvorgabe führt beim Freischlagen der Antriebsbaugruppe zu wesentlich verbesserten Ergebnissen. Dies resultiert daraus, daß aufgrund der elastischen mechanischen Kopplung von Elektromotor EM mit den übrigen Baugruppen der Antriebsbaugruppe eine drehwinkelabhängige Kraft auf den Rotor des Elektromotors EM ausgeübt werden kann. Durch das Freischlagen mittels positiven und negativen Stromimpulsen bewegt sich der Rotor des Elektromotors EM in eine kraftfreie Stellung, die sowohl in positiver als auch negativer Drehrichtung liegen kann.

Weiterhin wird bei der sprungförmigen Drehzahlvorgabe durch den Testsignalgenerator TSG2 unmittelbar an das erste Anregungssignal anschließend ein zusätzliches Anregungssignal gleichen Betrags aber mit negativem Vorzeichen ausgegeben. Eine derartige Ergänzung der impuls- und sprungförmigen Anregungssignale weist den Vorteil auf, daß während der Bestimmung der Verstärkungen im P- und I-Zweig der Rotor des Elektromotors EM wieder die gleiche Ausgangsstellung aufweist. Dadurch wird ein im normalen Betrieb überlagerter Lageregler nicht zu einer Regelung angeregt.

Weiterhin besteht die Möglichkeit bei einer Anregung durch eine Sprungfunktion auch für die umgekehrte Drehrichtung die Verstärkung im I-Zweig zu ermitteln und die einzustellende Verstärkung für den I-Zweig aufgrund der beiden Werte der Fehlerfunktion FF zu bestimmen. Dies ist besonders bei Elektromotoren EM vorteilhaft, deren Belastung drehrichtungsabhängig ist, wie beispielsweise bei Motoren für Vertikalachsen.

**Patentansprüche**

1.  Verfahren zur Ermittlung optimaler Reglerparameter für eine Drehzahlregelung eines Elektromotors (EM) einer Antriebsbaugruppe, wobei Parameter in Zweigen unterschiedlicher Regelcharakteristik, welche einen Regler (PI) eines Regelkreises für den Elektromotor (EM) bilden, bestimmt werden und wobei der Regelkreis durch Testsignale angeregt wird und die Parameter so lange verändert werden, bis der Regelkreis ein optimales Regelverhalten aufweist und die derart für einen oder mehrere Zweige des Reglers (PI) ermittelten Parameter im entsprechenden Zweig des Reglers (PI) eingestellt werden,
    **dadurch gekennzeichnet,**
    **dass** aufgrund spezieller Testsignale nur ein einzelner oder mehrere spezielle Zweige des Reglers (PI) optimal eingestellt werden, wobei als erstes Testsignal für einen Proportional-Zweig ein Stromimpuls benutzt wird und als zweites Testsignal für einen Integral-Zweig eine Sprungfunktion benutzt wird.

2.  Verfahren nach Anspruch 1, **dadurch gekennzeichnet**,

    - dass in einem ersten Schritt zur Einstellung einer Verstärkung im Proportional-Zweig des Reglers (PI) dem Elektromotor (EM) das erste Testsignal zugeleitet wird,
    - dass der zeitliche Verlauf der Ist-Drehzahl (ni) des Elektromotors (EM) in einem Meßintervall ermittelt und durch eine erste Bewertungsfunktion (BFP) bewertet wird,
    - dass die Verstärkung im Proportional-Zweig des Reglers (PI), ausgehend von einer geringen Verstärkung im Proportional- und Integral-Zweig des Reglers (PI), so lange erhöht wird, bis aufgrund der Bewertung mit der Bewertungsfunktion (BFP) eine beginnende Oszillation des Regelkreises detektiert wird,
    - dass die im Proportional-Zweig des Reglers (PI) bei beginnender Oszillation eingestellte Verstärkung mit einem Faktor kleiner eins multipliziert und im Proportional-Zweig des Reglers (PI) eingestellt wird,
    - dass in einem zweiten Schritt zur Einstellung der Verstärkung im Integral-Zweig des Reglers (PI) das zweite Testsignal dem Regelkreis als Führungsgröße zugeleitet wird,
    - dass der zeitliche Verlauf der Ist-Drehzahl (ni) des Elektromotors (EM) in einem Meßintervall ermittelt, durch eine zweite Bewertungsfunktion (BFI) bewertet wird und aufgrund einer Fehlerfunktion (FF) ein Abweichen von der Soll-Drehzahl (ns) im Meßintervall quantifiziert wird,
    - dass die Verstärkung im Integral-Zweig des Reglers (PI) ausgehend von einer großen Verstärkung, bei der eine Oszillation vorliegt, so lange verringert wird, bis ein Minimum der Fehlerfunktion (FF) vorliegt, und diese Verstärkung eingestellt wird.

3.  Verfahren nach Anspruch 2, **dadurch gekennzeichnet, dass** die Verstärkung im Integral-Zweig des Reglers (PI) so lange erhöht wird, bis der Wert der Fehlerfunktion (FF) sich um einen bestimmten Prozentsatz erhöht hat und daß diese Verstärkung eingestellt wird.

4.  Verfahren nach einem der Ansprüche 1 bis 3, **dadurch gekennzeichnet, dass** als erstes Testsignal zwei unmittelbar aufeinanderfolgende Stromimpulse benutzt werden, die gleichen Betrag aber unterschiedliche Polarität aufweisen.

5.  Verfahren nach einem der Ansprüche 3 oder 4, **dadurch gekennzeichnet, dass** die Amplitude der Stromimpulse auf die für den Elektromotor maximal zulässige Stromstärke oder auf eine Stromstärke, bei der eine eventuell vorhandene Strombegrenzung einsetzt, begrenzt werden.

6.  Verfahren nach Anspruch 2, **dadurch gekennzeichnet, dass** die erste Bewertungsfunktion (BFP) am Anfang des Meßintervalls einen Wert nahe Null aufweist und der Quotient aus der Summe der Bewertungsfaktoren der ersten Bewertungsfunktion (BFP) und der Anzahl der Bewertungsfaktoren den Wert Eins aufweist.

7.  Verfahren nach Anspruch 2 oder 6, **dadurch gekennzeichnet, dass** das Verhältnis (V) des mit der ersten Bewertungsfunktion (BFP) bewerteten Drehzahlverlaufs zu dem unbewerteten Drehzahlverlauf ermittelt wird und bei einem Verhältnis kleiner eins keine Oszillation detektiert wird.

8. Verfahren nach Anspruch 2, **dadurch gekennzeichnet, dass** die im Proportional-Zweig des Reglers (PI) bei beginnender Oszillation eingestellte Verstärkung mit einem Faktor im Bereich von 0,45 multipliziert wird.

9. Verfahren nach Anspruch 8, **dadurch gekennzeichnet, dass** die Sprunghöhe der Sprungfunktion aufgrund der im Proportional-Zweig eingestellten Verstärkung und der für den Elektromotor (EM) maximal zulässigen Stromstärke berechnet wird.

10. Verfahren nach Anspruch 8 oder 9, **dadurch gekennzeichnet, dass** als zweites Testsignal zwei Sprungfunktionen benutzt werden, wobei die zweite Sprungfunktion zeitlich unmittelbar an die erste Sprungfunktion anschließt, die gleiche Sprunghöhe aber unterschiedliches Vorzeichen aufweist.

11. Schaltungsanordnung zur Durchführung eines Verfahrens nach Anspruch 1, welche einen Drehzahlregelkreis bestehend aus einem Elektromotor (EM) mit integriertem Stromregler, einem Drehgeber (DG), einem Differenzierer DR, welcher die Ist-Drehzahl (ni) ausgibt, einem Addierer, welcher das invertierte Ausgangssignal des Differenzierers DR zur vorgegebenen Führungsgröße Soll-Drehzahl (ns) addiert und mit einem Regler (PI), welcher aufgrund der Summe von Soll-Drehzahl (ns) und invertierter Ist-Drehzahl (ni) den Motorstrom regelt,
**dadurch gekennzeichnet,**
**dass** ein zweiter Schalter (S2) vorgesehen ist, durch den die Führungsgröße des Regelkreises ausgewählt wird, daß ein zweiter Testsignalgenerator (TSG2) vorgesehen ist, welcher durch den Schalter (S2) ausgewählt wird, daß zwischen Regler (PI) und Elektromotor (EM) ein Addierer vorgesehen ist, dessen einer Eingang über einen ersten Schalter (S1) mit einem ersten Testsignalgenerator (TSG1) verbunden ist und daß Abgriffe des Eingangssignals des Reglers (PI) und des Ausgangssignals des Differenzierers (DR) vorgesehen sind, die eine Verbindung zu einer Analyseeinheit (AE) herstellen.

12. Schaltungsanordnung nach Anspruch 11, **dadurch gekennzeichnet, dass** die Analyseeinheit (AE) eine Steuereinrichtung zur Steuerung des ersten und zweiten Schalters (S1, S2) und des ersten und zweiten Testsignalgenerators (TSG1, TSG2) beinhaltet und daß die Analyseeinheit (AE) mit dem Regler (PI) zur Veränderung von Reglerparametern verbunden ist.

13. Schaltungsanordnung nach Anspruch 11, **dadurch gekennzeichnet, dass** die Analyseeinheit (AE) eine Recheneinheit, eine Steuereinheit und eine Speichereinheit beinhaltet.

14. Schaltungsanordnung nach Anspruch 12 oder 13, **dadurch gekennzeichnet, dass** die verwendeten Baugruppen digital realisiert werden.

15. Verwendung einer Schaltungsanordnung nach einem der Ansprüche 11 bis 14 zur Drehzahlregelung der Achsenantriebe und der Spindelantriebe einer Werkzeugmaschine.

**Claims**

1. Method of determining optimal control parameters for a rotational speed control of an electric motor (EM) of a drive assembly, wherein parameters are determined in branches of differing control characteristic which form a controller (PI) of a control loop for the electric motor (EM) and wherein the control loop is excited by test signals and the parameters are altered until the control loop has an optimal control behaviour and the parameters determined in this way for one or more branches of the controller (PI) are set in the corresponding branch of the controller (PI),
**characterised in that**
on the basis of special test signals only one individual branch or several special branches of the controller (PI) are set in an optimal manner, a current pulse being used as the first test signal for a proportional branch and a jump function being used as the second test signal for an integral branch.

2. Method according to claim 1, **characterised in that**

   - in a first step to set a gain in the proportional branch of the controller (PI), the first test signal is supplied to the electric motor (EM),
   - that the time history of the actual speed (ni) of the electric motor (EM) is determined in a measurement interval and is weighted by a first weighting function (BFP),
   - that the gain in the proportional branch of the controller (PI), starting from a low gain in the proportional and integral branch of the controller (PI) is increased until, as a result of the weighting with the weighting function (BFP) beginning oscillation of the control loop is detected,

- that the gain set in the proportional branch of the controller (PI) as the oscillation begins is multiplied by a factor smaller than one and set in the proportional branch of the controller (PI),

- that in a second step to set the gain in the integral branch of the controller (PI) the second test signal is supplied to the control loop as a reference variable,

- that the time history of the actual speed (ni) of the electric motor (EM) is determined in a measurement interval, weighted by a second weighting function (BFI) and on the basis of an error function (FF) a deviation from the set speed (ns) is quantified in the measurement interval,

- that the gain in the integral branch of the controller (PI) proceeding from a large gain, in which oscillation is present, is reduced until a minimum of the error function (FF) is present, and this gain is set.

3. Method according to claim 2, **characterised in that** the gain in the integral branch of the controller (PI) is increased until the value of the error function (FF) has increased by a specific percentage and **in that** this gain is set.

4. Method according to one of claims 1 to 3, **characterised in that** as the first test signal are used two current pulses which follow one another directly and which have the same value but differing polarity.

5. Method according to one of claims 3 or 4, **characterised in that** the amplitude of the current pulses is limited to the maximum admissible current intensity for the electric motor or to a current intensity in which possibly present current limitation starts.

6. Method according to claim 2, **characterised in that** the first weighting function (BFP) has a value close to zero at the beginning of the measurement interval, and the quotient of the sum of the weighting factors of the first weighting function (BFP) and the number of weighting factors has the value one.

7. Method according to claim 2 or 6, **characterised in that** the ratio (V) of the speed characteristic weighted with the first weighting function (BFP) to the non-weighted speed characteristic is determined and no oscillation is detected with a ratio smaller than one.

8. Method according to claim 2, **characterised in that** the gain set in the proportional branch of the controller (PI) as oscillation begins is multiplied by a factor in the region of 0.45.

9. Method according to claim 8, **characterised in that** the jump height of the jump function is calculated on the basis of the gain set in the proportional branch and of the maximum admissible current intensity for the electric motor (EM).

10. Method according to claim 8 or 9, **characterised in that** two jump functions are used as the second test signal, the second jump function directly following the first jump function chronologically and having the same jump height but a different sign.

11. Circuit arrangement to carry out a method according to claim 1, which has a speed control loop comprising an electric motor (EM) with an integrated current regulator, a rotary transducer (DG), a differentiator DR which outputs the actual speed (ni), an adder which adds the inverted output signal of the differentiator DR to the preset reference variable set speed (ns), and with a controller (PI) which controls the motor current on the basis of the sum of the set speed (ns) and inverted actual speed (ni),
**characterised in that**
a second switch (S2) is provided, through which the reference variable of the control loop is selected, **in that** a second test signal generator (TSG2) is provided which is selected through the switch (S2), **in that** between the controller (PI) and the electric motor (EM) an adder is provided, one input: of which is connected to a first test signal generator (TSG1) via a first switch (S1), and **in that** taps of the input signal of the controller (PI) and of the output signal of the differentiator (DR) are provided, which produce a connection to an analysing unit (AE).

12. Circuit arrangement according to claim 11, **characterised in that** the analysing unit (AE) contains a control device to control the first and second switches and the first and second test signal generators (TSG1, TSG2) and **in that** the analysing unit (AE) is connected to the controller (PI) to alter control parameters.

13. Circuit arrangement according to claim 11, **characterised in that** the analysing unit (AE) contains a computing

EP 0 896 263 B1

unit, a control unit and a memory unit.

14. Circuit arrangement according to claim 12 or 13, **characterised in that** the subassemblies used can be realised digital.

15. Use of a circuit arrangement according to one of claims 11 to 14 to control the rotational speed of the axle drives and the spindle drives of a machine tool.

**Revendications**

1. Procédé pour déterminer des paramètres de réglage optimaux pour une régulation de la vitesse de rotation d'un moteur électrique (EM) d'un module d'entraînement, dans lequel on détermine des paramètres dans des branches présentant des caractéristiques de régulation différentes qui forment un régulateur (PI) d'un circuit de régulation pour le moteur électrique (EM), dans lequel on excite le circuit de régulation avec des signaux de test et on fait varier les paramètres jusqu'à ce que le circuit de régulation présente une comportement de régulation optimal et on règle les paramètres ainsi déterminés pour une ou plusieurs branches du régulateur (PI) dans la branche correspondante du régulateur (PI),
**caractérisé en ce que**
sur la base de signaux de test particuliers, on règle de manière optimale seulement une ou plusieurs branches particulières du régulateur (PI), une impulsion de courant étant utilisée comme premier signal de test pour une branche proportionnelle et une fonction en échelon étant utilisée comme second signal de test pour une branche intégrale.

2. Procédé selon la revendication 1, **caractérisé**

   • **en ce que** au cours d'une première étape de réglage d'une amplification dans la branche proportionnelle du régulateur (PI), on envoie le premier signal de test au moteur électrique (EM),
   • **en ce qu'**on détermine l'évolution dans le temps de la vitesse de rotation (ni) effective du moteur électrique (EM) sur un intervalle de mesure et on la pondère par une première fonction de pondération (BFP),
   • **en ce qu'**on augmente l'amplification dans la branche proportionnelle du régulateur (PI), à partir d'une faible amplification dans la branche proportionnelle et dans la branche intégrale du régulateur (PI) jusqu'à ce que, du fait de la pondération avec la fonction de pondération (BFP) on détecte un début d'oscillation du circuit de régulation,
   • **en ce qu'**on multiplie par un facteur inférieur à un, l'amplification réglée dans la branche proportionnelle du régulateur (PI) au début de l'oscillation et on règle cette valeur dans la branche proportionnelle du régulateur (PI),
   • **en ce qu'**au cours d'une deuxième étape de réglage de l'amplification dans la branche intégrale du régulateur (PI), on applique le signal de test au circuit de régulation en tant que grandeur de référence,
   • **en ce qu'**on détermine l'évolution dans le temps de la vitesse de rotation effective (ni) du moteur électrique (EM) sur un intervalle de mesure, on la pondère à l'aide d'une deuxième fonction de pondération (BFI) et, sur la base d'une fonction d'erreur (FF), on quantifie un écart par rapport à la vitesse de rotation de consigne (ns) dans l'intervalle de mesure,
   • **en ce qu'**on diminue l'amplification dans la branche intégrale du régula teur (PI) à partir d'une amplification élevée pour laquelle on obtient une oscillation, jusqu'à l'obtention d'un minimum de la fonction d'erreur (FF) et qu'on règle cette amplification.

3. Procédé selon la revendication 2, **caractérisé en ce qu'**on augmente l'amplification dans la branche intégrale du régulateur (PI) jusqu'à ce que la valeur de la fonction d'erreur (FF) ait augmenté d'un certain pourcentage et **en ce qu'**on règle ladite amplification.

4. Procédé selon une des revendications 1 à 3, **caractérisé en ce qu'**on utilise comme premier signal de test, deux impulsions de courant consécutives qui ont la même valeur, mais des polarités différentes.

5. Procédé selon une des revendications 3 ou 4, **caractérisé en ce qu'**on limite l'amplitude des impulsions de courant à l'intensité maximale admissible pour le moteur électrique ou à une intensité à laquelle une limitation de courant éventuellement présente commence à agir.

6. Procédé selon la revendication 2, **caractérisé en ce que** la première fonction de pondération (BFP) au début de l'intervalle de mesure a a une valeur proche de zéro et que le quotient de la somme des facteurs de calcul de la première fonction de pondération (BFP) et du nombre de facteurs de pondération a la valeur 1.

7. Procédé selon une des revendications 2 ou 6, **caractérisé en ce qu'**on détermine le rapport (V) de la variation de vitesse pondéré avec la première fonction de pondération à la vitesse non pondérée et qu'on ne détecte pas d'oscillation lorsque le rapport est inférieur à 1.

8. Procédé selon la revendication 2, **caractérisé en ce qu'**on multiplie l'amplification réglée dans la branche proportionnelle du régulateur (PI), au début de l'oscillation, par un facteur de l'ordre de 0,45.

9. Procédé selon la revendication 8, **caractérisé en ce qu'**on calcule la hauteur d'échelon de la fonction en échelon sur la base de l'amplification réglée dans la branche proportionnelle du régulateur (PI) et de l'intensité de courant maximale admissible pour le moteur électrique (EM).

10. Procédé selon une des revendications 8 ou 9, **caractérisé en ce qu'**on utilise comme deuxième signal de test deux fonctions en échelon, la deuxième fonction en échelon qui suit immédiatement la première fonction en échelon, ayant la même valeur d'échelon, mais un signe différent.

11. Circuit pour la mise en oeuvre d'un procédé selon la revendication 1, comportant un circuit de régulation de vitesse qui comprend un moteur électrique (EM) à régulateur de courant intégré, un encodeur (DG), un différenciateur (DR) qui fournit la vitesse de rotation effective (ni), un additionneur qui ajoute le signal de sortie inversé du différenciateur DR à la grandeur de référence prédéterminée vitesse de rotation de consigne (ns) et un régulateur (PI) qui règle le courant moteur sur la base de la somme vitesse de rotation de référence (ns) et vitesse de rotation effective (ni) inversée,
**caractérisé**

   **en ce qu'**il est prévu un deuxième commutateur (S2) à l'aide duquel on sélectionne la grandeur de référence du circuit de régulation,
   **en ce qu'**il est prévu un second générateur de signal de test (TSG2) qui est sélectionné à l'aide du commutateur (S2),
   **en ce qu'**il est prévu entre le régulateur (PI) et le moteur électrique (EM) un additionneur, dont l'entrée est connectée par l'intermédiaire d'un premier commutateur (S1) à un premier générateur de signal de test (TSG1), et en ce qu'il est prévu des piquages du signal d'entrée du régulateur (PI) et du signal de sortie du différenciateur (DR) qui réalisent une liaison avec une unité d'analyse (AE).

12. Circuit selon la revendication 11, **caractérisé en ce que** l'unité d'analyse (AE) comprend une unité de commande pour commander les premier et second commutateurs (S1, S2) et les premier et second générateurs de signaux de test (TSG1, TSG2) et **en ce que** l'unité d'analyse (AE) est reliée au régulateur (PI) pour modifier les paramètres de réglage.

13. Circuit selon la revendication 11, **caractérisé en ce que** l'unité d'analyse (AE) comprend une unité de calcul, une unité de commande et une unité de mémoire.

14. Circuit selon la revendication 12 ou 13, **caractérisé en ce que** les modules utilisés sont de type numérique.

15. Utilisation d'un circuit selon une des revendications 11 à 14 pour réguler la vitesse de rotation des entraînements d'axes et de broches d'une machine-outil.

# FIG. 1

# FIG. 2

# FIG. 3

FIG. 4

FIG. 5